# EUROPEAN PATENT APPLICATION

(11) **EP 4 557 157 A1**
(43) Date of publication of application: **21.05.2025**
(21) Application number: 24203491.6
(22) Date of filing: 30.09.2024
(51) Int. Cl.: G06F 40/30, G06F 40/35

(54) **METHOD FOR PROCESSING NATURAL LANGUAGE MESSAGES AND NATURAL-LANGUAGE-MESSAGE PROCESSING SYSTEM**

(30) Priority: 14.11.2023 TW 112143775
(71) Applicant: Playsee Inc., KY1 -1208 West Bay Grand Cayman (KY)
(72) Inventor: LI, Yu-Hsien, 116 TAIPEI CITY (TW); LIN, Chen-Chou, TAIPEI (TW); LIN, Wen-Shiang, 247 NEW TAIPEI CITY (TW); LEE, Max Hen-Shau, 115603 TAIPEI CITY (TW)
(74) Representative: Durán-Corretjer, S.L.P.

(57) **Abstract**

A method for processing natural language messages and a natural-language-message processing system are provided. The system includes a cloud server (100). In the method, an online dialogue procedure is initiated for receiving user-input contents via a dialogue interface (115). An intelligent method is used to extract semantic features of the user-input content. A user preference and real-time environmental information can also be obtained. Then, contents that match the semantic features, the user preference, and the real-time environmental information can be determined. Dialogue contents can be generated by processing the contents with a natural language model. The dialogue content that matches the semantic features, the user preference, and the real-time environmental information is imported to the online dialogue procedure, and is outputted via the dialogue interface (115).

## Description

### FIELD OF THE DISCLOSURE

The present invention relates to a chat robot, and more particularly to a method and a system for processing natural language messages to have a dialogue according to user semantics, user preferences, and real-time environmental information.

### BACKGROUND OF THE DISCLOSURE

Artificial intelligences (AI) are rapidly developed in various fields, and one of the artificial intelligences is a natural language chatbot that is able to process natural languages and automatically generate contents. The chatbot is, for example, a chat generative pre-trained transformer (ChatGPT) developed by OpenAI. Such a natural language chatbot utilizes a generative artificial intelligence technology to pre-train large amounts of data, and then to generate new data correlated with original data. An intelligent model is created after a deep-learning process (such as a generative adversarial network (GAN)).

Taking the ChatGPT as an example, the ChatGPT is trained by learning large amounts of network data, and can chat with users by using the natural languages. However, responses to the users are usually standard answers generated through the learning process, and these responses are not adapted to the instant status of the user in real time. Despite being the natural language chatbot, the ChatGPT fails to provide contents correlated with the instant status of the user.

### SUMMARY OF THE DISCLOSURE

In response to the above-referenced technical inadequacies, the present invention provides a method for processing natural language messages and a natural-language-message processing system thereof. A user can chat with a chatbot that is implemented by natural language processing (NLP) and generative artificial intelligence (generative AI) technologies. Furthermore, by referring to a user preference and real-time environmental information, dialogue contents generated by the chatbot can be consistent with the user's personal requirements and an instant circumstance.

In the natural-language-message processing system that is implemented by a computer system, a cloud server is provided, and a processing circuit is used to perform the method for processing the natural language messages. The cloud server allows the user to initiate an online dialogue procedure via a user interface. The cloud server receives user-input contents via a dialogue interface. Then, semantic features of the user-input contents can be extracted. The semantic features, user data, and the real-time environmental information are referred to for determining the dialogue contents that are consistent with the current circumstance. The semantic features, the user data, and the real-time environmental information are then processed by a natural language model operated in the online dialogue procedure, so as to generate the dialogue contents. After being imported to the online dialogue procedure, the dialogue contents are outputted.

The content received by the system via the dialogue interface can be a text, a voice, or an audiovisual content. When the content received by the system is the voice or the audiovisual content, a textization process converts the content into the text, and a semantic analysis process is performed on the text, so as to retrieve semantic features of the text.

In an aspect, the natural language model operated in the cloud server employs a transformer model for conducting machine translation, document summarization, and document generation, so as to generate the dialogue contents. Further, the cloud server performs a vector operation on the user-input content, the user preference, and the real-time environmental information, annotates the text, calculates a vector of each of words, and retrieves correlated contents based on vector distances between the words. Therefore, the dialogue contents that are consistent with the user preference and the real-time environmental information can be obtained.

Further, the vector operation is performed on historical dialogue records recorded in a database of the cloud server or a memory, so as to generate the dialogue contents that are consistent with the user's current emotion.

### BRIEF DESCRIPTION OF THE DRAWINGS

The described embodiments may be better understood by reference to the following description and the accompanying drawings, in which:
Fig. 1 is a schematic diagram illustrating a framework of a system operating a method for processing natural language messages according to one embodiment of the present invention;
Fig. 2 is a schematic diagram illustrating data structure for operating the method for processing the natural language messages according to one embodiment of the present invention;
Fig. 3 is a flowchart illustrating the method for processing the natural language messages according to a first embodiment of the present invention;
Fig. 4 is a flowchart illustrating the method for processing the natural language messages according to a second embodiment of the present invention; and
Fig. 5 to Fig. 9 are exemplary examples of a user interface provided by a natural-language-message processing system according to certain embodiments of the present invention.

### DETAILED DESCRIPTION OF THE EXEMPLARY EMBODIMENTS

The present invention relates to a method for processing natural language messages and a natural-language-message processing system thereof. The method for processing the natural language messages can be operated in a cloud server for implementing the natural-language-message processing system. The cloud server provides services for a social media via a network, and invites users to join the social media for sharing texts, pictures, and audiovisual contents. The cloud server also provides respective chat robots ("chatbot") in various fields, and allows the users to chat through the services provided by the cloud server. The cloud server employs artificial intelligence technologies (such as a machine learning algorithm and the natural language processing (NLP) technology) to learn data in various fields, so as to train the chatbots for providing chatting services. The cloud server also obtains a user preference by learning activity data generated in the social media of the user. The chatbot relies on chatting semantics of the user, the user preference, and real-time environmental information to generate dialogue contents that are consistent with the user's personal requirements and current environmental features.

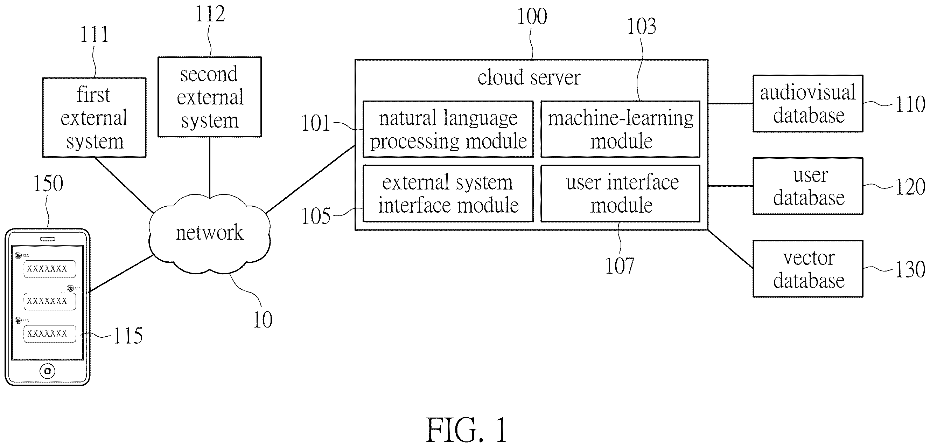

Regarding the system implemented by the cloud server, reference can be made to Fig. 1, which is a schematic diagram illustrating a framework of the system that operates the method for processing the natural language messages according to one embodiment of the present invention.

The diagram shows a cloud server 100 that is implemented by a computer system, a database, and a network, and various functional modules are implemented through collaboration of software and hardware. As shown in the diagram, a natural language processing module 101 that is used to perform the method for processing the natural language messages is provided. The natural language processing module 101 embodies a chatbot that is capable of processing natural languages. A machine-learning module 103 is used to operate a machine-learning algorithm for training a natural language model and learning network activities of the user by a deep-learning method, so as to establish the user preference. Accordingly, the chatbot can generate the dialogue contents that are consistent with the user preference. The cloud server 100 provides an external system interface module 105 that includes a circuitry and related software to connect with an external system (e.g., a first external system 111 and a second external system 112) via a network (e.g., a network 10) and retrieve data via an application program interface (API). The cloud server 100 provides a user interface module 107 that allows a user device 150 to connect with the cloud server 100 by a function of network connection. The cloud server 100 operates a web server for providing network services and allowing an application program executed in the user device 150 to obtain a corresponding service provided by the cloud server 100.

According to the system framework shown in the diagram, the cloud server 100 includes a built-in or an external database (such as an audiovisual database 110), and provides data services. For example, the user device 150 is allowed to access the audiovisual contents shared by other users and stored in the audiovisual database 110 via the network 10. The database also includes texts and pictures shared by other users. The cloud server 100 includes a user database 120 that is used to store user data, and the user data includes user personal data, uploaded texts, pictures, and audiovisual contents, and activity data relating to the network services provided by the cloud server 100. The activity data records the user's network activities, such as browsed contents, follows, likes, shares, and subscriptions. The activity data forms a user profile. Furthermore, the user database 120 stores and updates the user data in accordance with a time dimension when the dialogue contents are continuously produced over time. The user database 120 also records the user's historical dialogue records, which become dialogue records to be learned by the machine-learning method in the natural language model. The cloud server 100 includes a vector database 130, and the vector database 130 is used to record structured data that is formed by performing a vectorization algorithm on the various texts, pictures, and audiovisual contents. The structured data is configured to be compared for matching various personalized data.

According to the schematic diagram of the system framework shown in the diagram, the cloud server 100 retrieves data from the external system via the network 10 or a connection under a specific protocol. The external system is exemplified as the first external system 111 and the second external system 112. For example, the external system is a server set up by a government or an enterprise for providing open data. The cloud server 100 uses the external system interface module 105 to retrieve real-time data that meets a specific requirement via an application program interface (API) provided by each external system. The real-time data can be real-time weather, real-time traffic, real-time news, network information relating to a real-time location, etc.

The user device 150 executes an application program provided by the cloud server 100. For example, the cloud server 100 provides a social media service, and the user device 150 executes a corresponding social media application program that accesses the social media service via the user interface module 107 of the cloud server 100. In particular, the cloud server 100 uses the natural language processing module 101 to provide a natural language chatbot, such that the user can chat with the chatbot via a dialogue interface 115. On the other hand, the cloud server 100 learns the activity data to be generated when the user accesses the various services provided by the cloud server 100 through the machine-learning module 103. The activity data is, for example, data to be generated when the user manipulates the social media application program and the dialogue interface 115. The machine-learning module 103 can learn interest features of the user, so as to establish the user data.

It is worth mentioning that the texts, the pictures, and the audiovisual contents retrieved by the cloud server 100 are not structured data, and can be converted to vectorized data by way of encoding, so as to easily acquire the meaning and facilitate data searching. Further, the vectorized data can be used to compare with a search keyword provided by the user. For example, a distance function is used to calculate a distance between the search keyword and the vectorized data stored in a database. The closer the distance is, the more relevant the data is. Therefore, the user can search data through the vector database 130.

In one of the embodiments, the vector database 130 of the cloud server 100 supports multi-mode search services for texts and images, and provides structured information. For example, the various texts, pictures, and audiovisual content are textified, and a vector operation is performed on the textified contents for obtaining the vectorized data. The vectorized data can be used in a search service. The vectorized data can be used in a natural language processing process. The natural language processing process uses the natural language model to map the vectorized data to a vector space. Taking words and phrases inputted by the user as an example, the vector operation is performed on the words and the phrases, so as to obtain word vectors.

In one embodiment of the present invention, the method for processing the natural language messages can be implemented as a chatbot operated in the cloud server 100. The chatbot can use the natural language to chat with the users in texts and voices. In addition to responding to the user's inputted messages, the cloud server can detect personality and habits of the user by retrieving the user data via the cloud server 100 before chatting. Further, the cloud server can also acquire a real-time status from the external system (e.g., the first external system 111 or the second external system 112). For example, the cloud server obtains the local weather and news according to the location of the user, such that the response to the user is not only based on the user preference but also reflects an actual status.

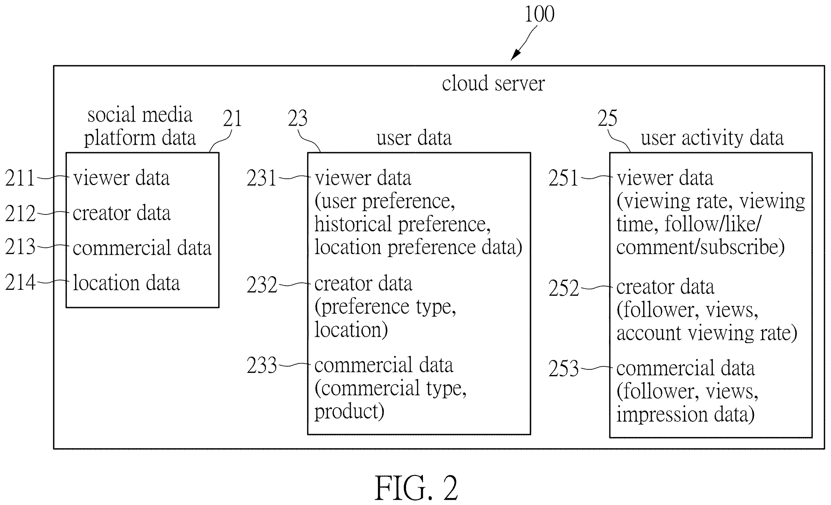

The chatting service provided by the system can be one of the functions operated in the social media. The user activity in the social media can serve as the data for the system to learn the user preference. The user activity data also forms structured data in the system. Reference is made to Fig. 2, which is a schematic diagram illustrating data structure for operating the method for processing the natural language messages according to one embodiment of the present invention. The data can be divided into social media platform data 21, user data 23, and user activity data 25.

The social media platform data 21 is non-public data in the system. The system operating the method for processing the natural language messages retrieves viewer data 211 (data of the users accessing various contents provided by the cloud server), creator data 212 that the system provides about creators of the various contents, and commercial data 213 that the system provides for enterprises to create enterprise data for advertising purposes. Further, the system provides location-based services, and thus can obtain geographic location-related location data 214.

The user data 23 is non-public data in the system. The user data 23 includes data edited by the user himself. The user data 23 also includes viewer data 231 retrieved from the various user activity data. The viewer data 231 includes interest data of the users who act as viewers, and the interest data is obtained by the system through a machine-learning method. The interest data includes recent interest data, history interest data, and location-related interest data.

Creator data 232 of the user data 23 is data relating to the users who act as creators. The creator data 232 includes preference types and location-related data of the creators learned by the system through the machine-learning method. For example, the creator data 232 includes the data of the users who act as creators, and the interested types and locations of creators learned through the machine-learning method. The interested locations of the creators include geographic locations or specific locations within a place.

When the user is an enterprise, commercial data 233 of the user data 23 includes an enterprise commercial type and product features thereof that are obtained by the system through a machine-learning process.

The user activity data 25 is non-public data in the system. The user activity data 25 includes statistical data of activities in various services provided by the cloud server. The user activity data 25 also includes data obtained through the machine-learning process. The user activity data 25 mainly includes viewer data 251, creator data 252, and commercial data 253.

The viewer data 251 of the user activity data 25 includes viewing rates, viewing times, and activity data (such as follows, likes, comments, and subscriptions) when the users use the services provided by the cloud server. The creator data 252 of the user activity data 25 includes statistical data of the users who act as creators. The statistical data includes a quantity of followers of channels or accounts, views of the created contents, and account viewing rates. The commercial data 253 includes a quantity of followers, content views, and overall impression data obtained when the user is an enterprise.

The social media platform data 21, the user data 23, and the user activity data 25 are obtained by the cloud server that collects and learns data. The social media platform data 21, the user data 23, and the user activity data 25 form a basis for the system to operate natural language processing and a generative artificial intelligence technology, so as to implement the chatting service. The cloud server uses a processing circuit to process the above data for implementing a chatbot that can meet the requirements of personalization and instantaneousness.

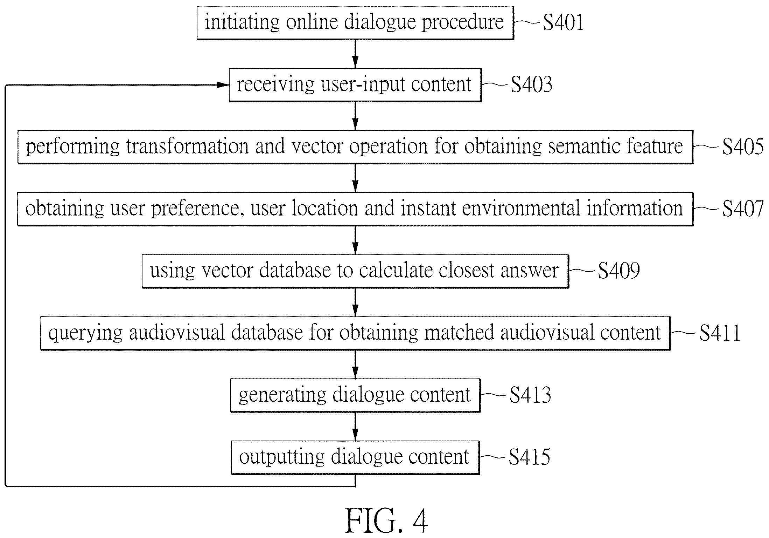

In one embodiment of the present invention, the natural language model operated in the cloud server performs a vector operation on the content inputted by the user (via the dialogue interface), the user preference, and the real-time environmental information, annotates the texts, calculates a vector of each of the words, and queries a database for retrieving correlated contents based on vector distances among the words. Accordingly, the dialogue contents being consistent with the user preference and the real-time environmental information can be obtained. In an online dialogue procedure, a transformer model is used to conduct machine translation, document summarization, and document generation on the textized data. Reference is made to Fig. 4, which is a flowchart illustrating a process of obtaining semantics of the user-input content in the dialogue interface and enabling the chatbot to generate the dialogue contents.

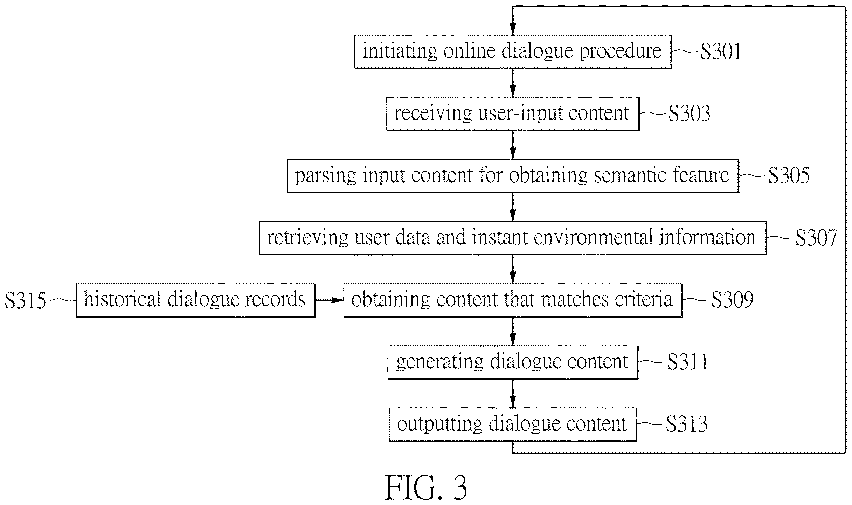

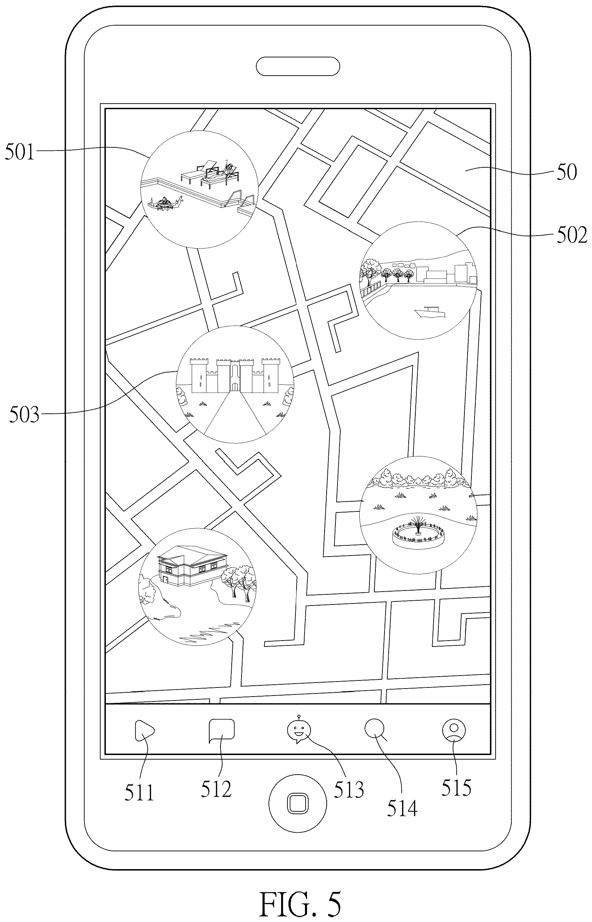

The above-described chatting process implemented by the method for processing the natural language messages can be achieved by a graphical user interface (GUI) initiated by an application program executed in a user device. The application program can be a social media application program used to display the dialogue contents between the chatbot and the user via the graphical user interface. Reference is made to Fig. 3, which is a flowchart illustrating the method for processing the natural language messages operated in the cloud server according to one embodiment of the present invention. Regarding the description of the flowchart, reference can also be made to Fig. 5 to Fig. 9, which are exemplary examples of the graphical user interface provided by the natural-language-message processing system. It should be noted that the exemplary examples shown in the diagrams are not intended to limit the scope of the present invention.

In the flowchart shown in Fig. 3, in the beginning, an application program is performed in the user device for connecting with a cloud server and using services provided by the cloud server. The user uses the application program to browse contents provided by the cloud server. For example, the user interface module 107 shown in Fig. 1 initiates a graphical user interface for the user to manipulate browsing texts, pictures, and audiovisual contents. The graphical user interface can be a map interface 50 shown in Fig. 5 that uses an electronic map as a background. The geographic information correlated to each of the audiovisual contents is represented by a linking icon marked on the map interface 50, such as linking points correlated to multiple geographic locations shown on the map interface 50. For example, the linking points can include one or more audiovisual linking points that are exemplarily represented by audiovisual linking points 501, 502, 503.

According to one embodiment of the present invention, as shown in Fig. 5, when the contents displayed on the map interface 50 are browsed, some linking icons (such as "playback 511", "dialogue 512", "helper 513", "search 514", and "user main page 515") are shown at a bottom position. The user can touch or use a specific gesture to actuate the dialogue-linking icon "dialogue 512" or any linking point marked at a specific place on the map interface 80, so as to activate the online dialogue procedure (step S301).

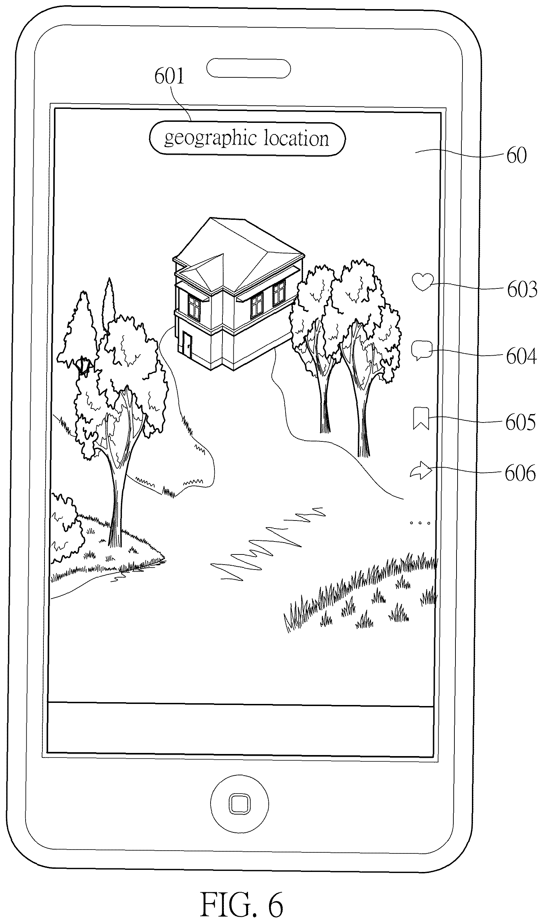

On the other hand, Fig. 6 is another schematic diagram depicting a linking method for activating the online dialogue procedure according to one embodiment of the present invention. When the user selects any of the audiovisual linking points (501, 502, or 503) shown on the map interface 50, an audiovisual playback page 60 shown in Fig. 6 is then initiated. The audiovisual playback page 60 is used to play the video shared or produced by a user. The diagram also shows a geographic location 601 correlated with the video. A sidebar shows several linking icons, such as "like 603", "dialogue 604", "collect 605", and "share 606." The online dialogue procedure is activated when the user actuates a dialogue-linking icon "dialogue 604" (step S301).

After that, a dialogue interface is initiated and provided for the user to input texts, pictures, or a specific audiovisual content. For example, the user can share a link to the audiovisual content. The cloud server then uses the user interface module to receive the user-input content (step S303).

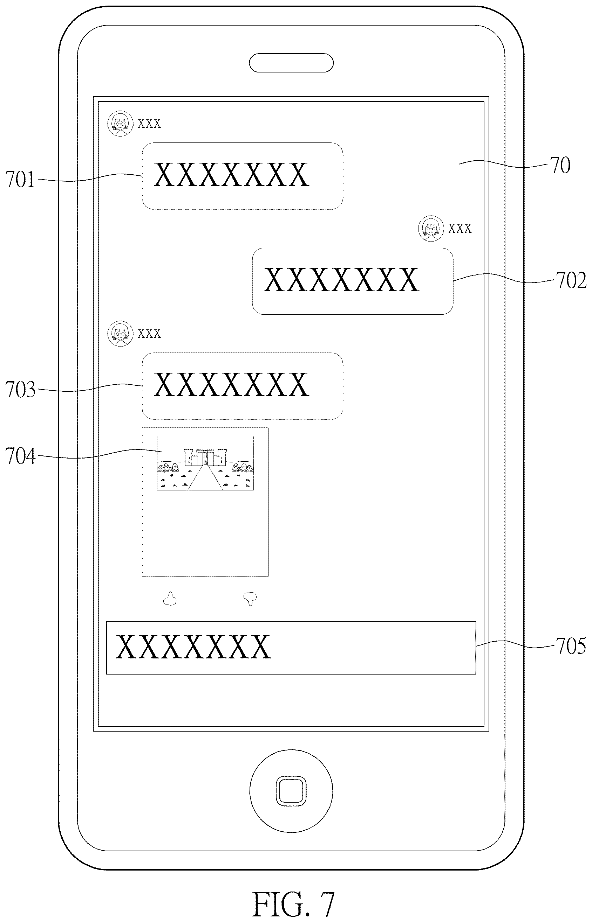

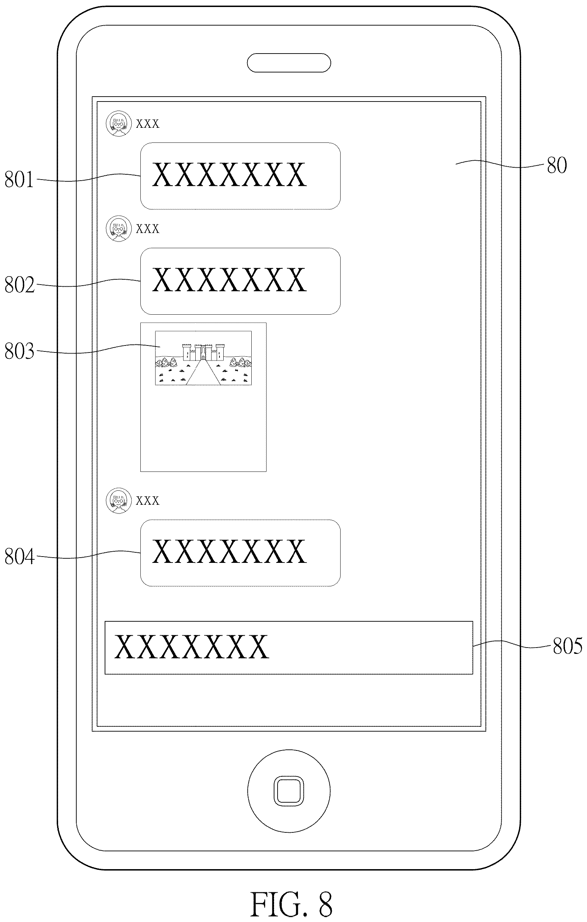

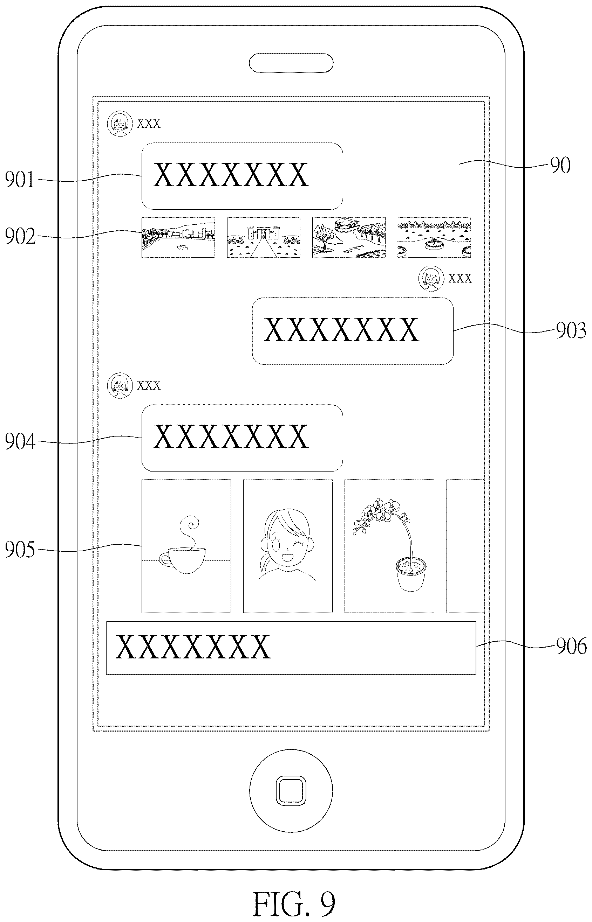

According to one embodiment of the present invention, the online dialogue procedure implements a chatbot that applies a natural language model. The chatbot can chat with users via a dialogue interface and perform the method for processing the natural language messages on each of the user-input contents. Referring to a dialogue interface 70 shown in Fig. 7, a dialogue interface 80 shown in Fig. 8, and a dialogue interface 90 shown in Fig. 9, each exemplary dialogue interface provides an input field for the user-input contents and a dialogue display area that displays the dialogue contents outputted by the chatbot and the user-input contents.

In the meantime, the cloud server uses a user interface module to retrieve the user-input content. The content retrieved via the dialogue interface can be texts, voices, or audiovisual contents. When the contents to be retrieved are the voices or the audiovisual contents, the contents can be textized through a textization process, so as to be converted into texts. The texts are then processed by a semantic analysis process, so as to extract semantic features (step S305). In the above steps, the cloud server retrieves user data from a user database and the real-time environmental information from an external system, such as via the external system interface module 105 shown in Fig. 1 (step S307).

Afterwards, the semantic features that are consistent with the user-input content can be determined. For example, after a database is queried, the semantic features can be obtained by filtering. The user preference retrieved from the user data and the real-time environmental information can be obtained (step S309), and then processed by the natural language model operated in the online dialogue procedure, so as to generate the dialogue contents (step S311). The dialogue contents can then be imported to the online dialogue procedure, and outputted via the dialogue interface (step S313).

Further, the natural language model operated in the cloud server uses multidimensional data recorded in the database or the system memory. The data also includes historical dialogue records generated in the same online dialogue procedure. Apart from factoring in the semantic features of the dialogue, the user preference, and the real-time environmental information, the historical dialogue records generated in the current online dialogue procedure are also taken into consideration (step S315) before the chatbot generates the dialogue contents (such as in step S309). Accordingly, the natural language model is facilitated to generate the dialogue contents that are consistent with the current circumstance (step S311).

It should be noted that the historical dialogue records generated in the same online dialogue procedure can indicate the current circumstance and reflect the user's current emotion and requirements. As shown in the embodiment of Fig. 1, since the natural language model 101 of the cloud server 100 can simultaneously take the user semantics, the user preference, the real-time environmental information, and the historical dialogue records into consideration when generating further dialogue contents, the same dialogue circumstance can be continued. In other words, further dialogue contents generated by the natural language model can continue the same dialogue topic. For example, the wordings used in the previous dialogue contents and the subsequent dialogue contents can have the same tone (which reflects the user's emotions, such as joy, anger, sorrow, and pleasure). Therefore, the chatbot (with the natural language model) can learn how the user expresses his emotions through the historical dialogue records.

Referring to Fig. 7, the dialogue interface 70 shows several dialogue contents 701, 702 and 703 that are generated between the user and the chatbot. The chatbot can rely on the semantic features extracted from the dialogue content 702 for querying the database, so as to provide a recommended audiovisual content 704. An input field 705 is provided at a bottom position of the dialogue interface 70 for the user to input further dialogue contents.

In one further example, reference is made to the dialogue interface 80 shown in Fig. 8. When an online dialogue procedure is activated, the system can directly provide natural language dialogue contents 801, 802, and 804 and a recommended audiovisual content 803 based on the user preference and real-time information. The user can then respond to these dialogue contents (e.g., 801, 802, 803, and 804) via an input field 805 in the dialogue interface 80.

According to one further embodiment of the present invention, the dialogue contents generated by the natural language model operated in the chatbot according to semantic features of the user-input content, the user preference, and the real-time environmental information can include multiple recommendation options, multiple recommended audiovisual contents, and/or links to multiple recommended friends. Reference is made to the exemplary example shown in Fig. 9.

In the online dialogue procedure, the dialogue interface 90 shown in Fig. 9 has a dialogue content 901 that is generated by the chatbot based on the semantic features. In the present example, the chatbot determines that the user is making a specific decision based on the semantics, and accordingly provides several recommendation options 902. In particular, the chatbot can rely on the real-time environmental information obtained from an external system to provide recommendation options to the user. The chatbot can provide the recommendation options 902 based on the real-time weather, the real-time traffic, time, and the current location of the user. For example, if the time happens to be a meal time, the chatbot can provide meal options provided by some nearby restaurants that are open in business based on the user's diet habits.

Similarly, if the user expresses his wish to watch an audiovisual content, the chatbot can provide multiple recommended audiovisual contents through the recommendation options 902. If the chatbot determines that the user intends to find friends with similar interests, the recommendation options 902 can be links to multiple recommended friends.

Further, the user uses the input field 906 to respond to these recommendation options 902 by inputting a dialogue content 903. As such, the chatbot can rely on the semantics of the dialogue content 903 to provide a dialogue content 904, and multiple recommended contents 905 can be further provided based on the semantics of the above dialogue contents. In continuance to the above example, when the user responds that he desires to choose one of the meals, the chatbot firstly acquires real-time weather and traffic from an external system and the current location of the user, and then provides restaurant options having the chosen meal. Furthermore, if it is determined that the weather is bad and there is a traffic jam on the road, the chatbot will correspondingly recommend other restaurant options that are easily accessible for the user.

Reference is made to Fig. 4, which is one further flowchart illustrating the method for processing the natural language messages according to one embodiment of the present invention.

In the flowchart of Fig. 4, the user uses an application program to activate an online dialogue procedure (step S401), and chats with a chatbot. The cloud server receives the dialogue contents inputted by the user (step S403). The cloud server then acquires the semantic features of the dialogue contents inputted by the user. In the embodiment, the cloud server uses a natural language processing module to perform a transformer algorithm and a vector operation, so as to obtain the semantic features (step S405).

It should be noted that, according to certain embodiments of the method for processing the natural language messages provided in the present invention, an artificial intelligence technology is used to learn natural languages and conduct natural language understanding on the natural languages for categorizing the texts and performing semantic analysis on the texts. When the user-input dialogue contents are being processed, a deep-learning method of a transformer model (issued by Google^{™} Brain in 2017) is incorporated to process the user-input natural language contents with an attribute of time sequence. If the user-input contents are not texts, the contents should be textized into texts. Thus, in the online dialogue procedure, the transformer model can be used to conduct machine translation, document summarization, and document generation.

After the semantic features of the dialogue contents inputted by the user are extracted, in view of the user preference and the current location of the user, or the interested locations analyzed from the dialogue contents of the user, the system also obtains the real-time environmental information from an external system based on the current location (step S407). It should be noted that the real-time environmental information includes one or any combination of real-time weather, real-time traffic, real-time news, and network information relating to a real-time location (e.g., POIs on a map or evaluations of POIs) obtained from one or more external systems.

Afterwards, the system uses the vector database to calculate a closest answer based on the semantic features, the user preference, and the real-time environmental information, or plus the historical dialogue records (step S409). It is worth mentioning that the data in the vector database is structured data obtained by the vector operation, and the system can rely on the vector distances to acquire the words with similar semantics from the data in the vector database. For example, a vector distance between the word "computer" appeared in the dialogue content and the word "computation" in the vector database is closer than a vector distance between the words "computer" and "running".

In the present embodiment, the vector operation is performed on the user-input content, the interested contents of the user, and the real-time environmental information (plus the historical dialogue records if required), and then the texts obtained by the vector operation are annotated. The vector of each of the words is calculated. The correlated contents are then obtained based on the vector distances between the words in the texts. Accordingly, the dialogue contents that are consistent with the user preference and the real-time environmental information can be obtained. In one further embodiment of the present invention, when the vector operation is performed on the historical dialogue records, the chatbot can generate the dialogue contents that are consistent with the user's current emotion. For example, the same topic in the same online dialogue procedure can be continued, and the corresponding wordings that are consistent with the emotion can be used.

Further, the system can obtain the audiovisual contents that are consistent with the interests of the user by querying the audiovisual database based on the above-mentioned information (step S411). The chatbot uses the natural language processing technology to process the user-input contents, and uses a generative artificial intelligence technology to generate the dialogue contents (step S413). The dialogue contents are then outputted via the dialogue interface (step S415). In one further aspect, the above steps will be repeated in the online dialogue procedure, and the chatbot can use a natural language in texts or voices to chat with the user and provide the interested and instant contents (e.g., audiovisual contents or texts) to the user.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A method for processing natural language messages, which is performed in a cloud server (100), **characterized by** comprising:
initiating an online dialogue procedure for receiving user-input contents via a dialogue interface (115);
extracting semantic features of the user-input content;
obtaining user data and real-time environmental information;
determining contents that are consistent with the semantic features of the user-input content, a user preference obtained from the user data, and the real-time environmental information, and processing the contents by a natural language model operated in the online dialogue procedure, so as to generate dialogue contents; and
importing the dialogue content to the online dialogue procedure, and outputting the dialogue content via the dialogue interface (115).

2. The method according to claim 1, wherein the dialogue content received via the dialogue interface (115) is a text, a voice, or an audiovisual content; wherein, when the dialogue content is the voice or the audiovisual content, a textization process converts the voice or the audiovisual content into the text, and a semantic analysis process is performed on the text for retrieving semantic features of the text.

3. The method according to claim 2, wherein the natural language model operated in the cloud server (100) employs a transformer model for conducting machine translation, document summarization, and document generation, so as to generate the dialogue contents.

4. The method according to claim 3, wherein the cloud server (100) performs a vector operation on the user-input content, the user preference, and the real-time environmental information, annotates the text, calculates a vector for each of words, retrieves correlated contents based on vector distances between the words, and generates the dialogue contents that are consistent with the user preference and the real-time environmental information.

5. The method according to claim 4, wherein the cloud server (100) further performs the vector operation on historical dialogue records recorded in the cloud server (100) for generating the dialogue content.

6. The method according to claim 1, wherein the real-time environmental information includes at least one of real-time weather, real-time traffic, real-time news, and network information relating to a real-time location that is retrieved from one or more external systems in real time.

7. The method according to claim 1, wherein the dialogue contents include texts generated by the natural language model and audiovisual contents obtained by querying an audiovisual database (110).

8. The method according to any of claim 1 to claim 7, wherein the online dialogue procedure implements a chatbot that applies the natural language model for chatting with a user via the dialogue interface (115) and performing the method on each of the user-input contents.

9. The method according to claim 8, wherein the dialogue interface (115) provides an input field for the user-input contents and a dialogue display area that displays the dialogue contents outputted by the chatbot and the user-input contents.

10. The method according to claim 9, wherein the dialogue contents generated by the natural language model operated in the chatbot according to the semantic features of the user-input content, the user preference, and the real-time environmental information include at least one of multiple recommendation options, multiple recommended audiovisual contents, and multiple friend suggestion links.

11. A natural-language-message processing system, which is implemented by a computer system, **characterized by** comprising:
a cloud server (100), wherein the cloud server (100) uses a processing circuit to perform a method for processing natural language messages, and the method includes:
initiating an online dialogue procedure for receiving user-input contents via a dialogue interface (115);
extracting semantic features of the user-input content;
obtaining user data and real-time environmental information;
determining contents that are consistent with the semantic features of the user-input content, a user preference obtained from the user data, and the real-time environmental information, and processing the contents by a natural language model operated in the online dialogue procedure, so as to generate dialogue contents; and
importing the dialogue content to the online dialogue procedure, and outputting the dialogue content via the dialogue interface (115).

12. The natural-language-message processing system according to claim 11, wherein the cloud server (100) provides an external system interface that is used to connect with one or more external systems and receive the real-time environmental information, and the real-time environmental information includes at least one of real-time weather, real-time traffic, real-time news, and network information relating to a real-time location.

13. The natural-language-message processing system according to claim 11, wherein the natural language model operated in the cloud server (100) employs a transformer model for conducting machine translation, document summarization, and document generation, so as to generate the dialogue contents; wherein the cloud server (100) performs a vector operation on the user-input content, the user preference, and the real-time environmental information, annotates texts, calculates a vector of each of words, retrieves correlated contents based on vector distances between the words, and generates the dialogue contents that are consistent with the user preference and the real-time environmental information.

14. The natural-language-message processing system according to claim 13, wherein the cloud server (100) further performs the vector operation on historical dialogue records recorded in the cloud server (100), so as to generate the dialogue contents.

15. The natural-language-message processing system according to claim any of claim 11 to claim 14, wherein the online dialogue procedure implements a chatbot that applies the natural language model for chatting with a user via the dialogue interface (115) and performing the method on each of the user-input contents.
